# FASCICULE DE BREVET EUROPEEN

(11) **EP 2 165 799 B1**
(45) Date de publication et mention de la délivrance du brevet: **21.03.2012**
(21) Numéro de dépôt: 09305850.1
(22) Date de dépôt: 15.09.2009
(51) Int. Cl.: B23Q 5/32, B23Q 11/10

(54) **Machine d'usinage dont l'avance et le recul de la broche actionne le pompage de lubrifiant**
Werkzeugmachine deren hin und her Spindelbewegung eine Schmierpumpe betreibt
Machine tool having a spindle, the back and forth movement of which actuates a lubrication pump

(30) Priorité: 18.09.2008 FR 0856292
(43) Date de publication de la demande: 24.03.2010
(73) Titulaire: Cooper Power Tools SAS, 77330 Ozoir la Ferrière (FR)
(72) Inventeur: Galand, Jérôme, 77330 Ozoir la Ferrière (FR)
(74) Mandataire: Jacobson, Claude

(56) Documents cités:
- WO-A-2006/009184
- DE-U1- 9 318 582

## Description

La présente invention concerne une machine d'usinage, du type comprenant :
- un carter ;
- une broche porte-outils s'étendant le long d'un axe et destinée à porter un outil d'usinage ;
- un mécanisme d'entraînement à avance mécanique de la broche porte-outils, apte à entraîner la broche simultanément en rotation autour de son axe par rapport au carter et en translation le long de son axe par rapport au carter suivant un mouvement d'avance ou de recul ; et
- un système de lubrification de l'outil d'usinage, comprenant :
   - une entrée de lubrifiant,
   - un conduit de lubrifiant délimité par la broche, le conduit de lubrifiant débouchant à une extrémité de la broche destinée à porter l'outil d'usinage, pour alimenter l'outil d'usinage en lubrifiant ; et
   - un module d'admission de lubrifiant reliant l'entrée de lubrifiant audit conduit de lubrifiant.

L'invention s'applique par exemple à la construction aéronautique.

Une machine de ce type est connue par exemple de FR-A-2 873 315. Le mécanisme d'entraînement d'une telle machine est dit « à avance mécanique » en français ou « positive feed drill » en anglais.

Le système de lubrification assure, grâce à un réservoir de lubrifiant et à une pompe disposés à l'extérieur du carter, l'alimentation en lubrifiant de l'outil d'usinage porté par la broche.

Néanmoins, le système de lubrification est encombrant.

WO 2006/009184 décrit également une machine d'usinage conforme au préambule de la revendication 1.

Un but de l'invention est de fournir une machine d'usinage dont le système de lubrification est d'encombrement réduit.

A cet effet, l'invention a pour objet une machine d'usinage du type précité, caractérisé en ce que le module d'admission de lubrifiant forme une pompe de lubrifiant aspirant le lubrifiant à partir de l'entrée de lubrifiant et alimentant le conduit de lubrifiant de la broche avec le lubrifiant aspiré, l'avance et le recul de la broche le long de son axe actionnant le pompage de lubrifiant par le module d'admission.

Suivant des modes particuliers de réalisation, la machine d'usinage selon l'invention comporte l'une ou plusieurs des caractéristiques suivantes, prise(s) isolément ou suivant l'une quelconque des combinaisons techniquement possibles :
- le module d'admission présente une configuration d'alimentation en lubrifiant du conduit de lubrifiant de la broche et une configuration d'aspiration de lubrifiant depuis l'entrée de lubrifiant, l'avance de la broche actionnant le module d'admission dans la configuration d'alimentation et le recul de la broche actionnant le module d'admission dans la configuration d'aspiration ;
- la configuration d'aspiration de lubrifiant par le module d'admission correspond à une configuration d'arrêt d'alimentation par le module d'admission, du conduit de lubrifiant de la broche ;
- le module d'admission comprend un piston et un cylindre définissant ensemble une chambre de pompage, la chambre de pompage étant reliée à l'entrée de lubrifiant et au conduit de lubrifiant de la broche, la broche étant liée en translation le long de son axe à l'un du piston et du cylindre, l'avance et le recul de la broche le long de son axe modifiant le volume de la chambre de pompage ;
- l'autre du piston et du cylindre est fixe en translation par rapport au carter suivant l'axe de la broche ;
- la broche est liée en translation le long de son axe avec le cylindre ;
- le piston délimite un conduit de remplissage relié à l'entrée de lubrifiant et débouchant dans la chambre de pompage, le piston délimitant un conduit d'alimentation débouchant dans la chambre de pompage et relié au conduit de lubrifiant de la broche, le piston comprenant une soupape de remplissage mobile entre une position de fermeture du conduit de remplissage et une position d'ouverture du conduit de remplissage, et une soupape d'alimentation mobile entre une position de fermeture du conduit d'alimentation et une position d'ouverture du conduit d'alimentation ;
- dans la configuration d'aspiration, la soupape de remplissage est dans sa position d'ouverture tandis que la soupape d'alimentation est dans sa position de fermeture et, dans la configuration d'alimentation, la soupape de remplissage est dans sa position de fermeture tandis que la soupape d'alimentation est dans sa position d'ouverture ;
- la soupape de remplissage et la soupape d'alimentation sont sollicitées élastiquement vers leur position de fermeture par un organe de sollicitation élastique respectif ;
- l'effort exercé par l'organe de sollicitation élastique sur la soupape de remplissage est inférieur à l'effort de succion exercé par le lubrifiant présent dans la chambre de pompage, sur la soupape de remplissage, lors du recul de la broche le long de son axe ;
- l'effort exercé par l'organe de sollicitation élastique sur la soupape d'alimentation est inférieur à l'effort de pression exercé par le lubrifiant présent dans la chambre de pompage, sur la soupape d'alimentation, lors de l'avance de la broche le long de son axe ;
- le module d'admission est logé dans le carter ;
- la machine d'usinage comporte un réservoir de lubrifiant, relié à l'entrée de lubrifiant, et de préférence disposé à l'extérieur du carter de la machine ; et
- le mécanisme d'entraînement de la broche comporte :
   - un premier organe d'entraînement en rotation de la broche autour de son axe par rapport au carter ;
   - un deuxième organe d'entraînement translation de la broche le long de son axe par rapport au carter, le deuxième organe d'entraînement étant vissé sur un tronçon fileté de la broche de sorte que la broche avance ou recule en fonction de la vitesse relative de rotation entre le premier organe d'entraînement et le deuxième organe d'entraînement.

L'invention a également pour objet un procédé d'usinage d'un matériau au moyen d'une machine d'usinage portant un outil d'usinage, le procédé comprenant une étape de lubrification automatique de l'outil d'usinage par la machine d'usinage, caractérisé en ce que la machine d'usinage est telle que définie ci-dessus, l'étape de lubrification comprenant une étape de pompage de lubrifiant par le mouvement alternatif d'avance et de recul de la broche.

L'invention sera mieux comprise à la lecture de la description qui va suivre, fournie uniquement à titre d'exemple, et faite en se référant aux dessins annexés, sur lesquels :
- la Figure 1 est une vue schématique en coupe latérale d'une machine d'usinage selon l'invention ;
- la Figure 2 est une vue agrandie d'un détail II de la Figure 1, illustrant un système de lubrification de la machine de la Figure 1 ;
- la Figure 3 est une vue analogue à la Figure 2 illustrant le système de lubrification dans une configuration d'alimentation de l'outil d'usinage en lubrifiant, lors de l'avance de la broche portant l'outil ;
- la Figure 4 est une vue analogue aux Figures 2 et 3, en fin de course d'avance de la broche ; et
- la Figure 5 est une vue analogue à la Figure 3 illustrant le système de lubrification dans une configuration d'aspiration de lubrifiant.

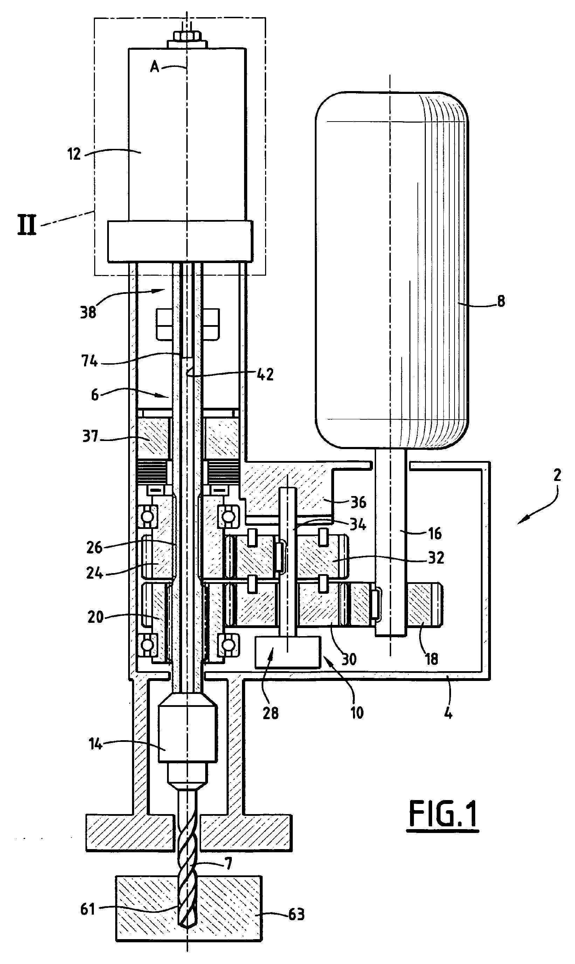

Dans tout ce qui suit, les termes «droite», «gauche», vertical», « horizontal », « inférieur », « supérieur », « haut » et « bas » s'entendent par rapport à la position de la machine sur la Figure 1.

La Figure 1 illustre schématiquement une machine d'usinage portative 2 qui comprend principalement :
- un carter 4 ;
- une broche porte-outils 6 s'étendant suivant un axe vertical A et portant un outil de perçage 7 ;
- un moteur 8, par exemple pneumatique ;
- un mécanisme d'entraînement 10 de la broche 6 reliant mécaniquement le moteur 8 et la broche 6 ; et
- un système de lubrification 12 de l'outil 7.

La broche 6 est reçue dans le carter 4 de manière mobile en rotation autour de son axe A et en translation le long de cet axe A.

L'outil de perçage 7 est par exemple un foret, monté de manière amovible à l'extrémité inférieure 14 de la broche 6.

L'arbre de sortie 16 du moteur 8 porte un pignon de sortie 18 qui engrène avec le mécanisme d'entraînement 10.

Comme illustré par la Figure 1, le mécanisme d'entraînement 10 comprend les éléments suivants pour qu'il constitue un mécanisme dit « à avance mécanique » en français ou « positive feed drill » en anglais :
- un premier pignon 20 d'entraînement en rotation de la broche 6 autour de son axe A par rapport au carter 4 ;
- un deuxième pignon 24 d'entraînement en translation de la broche 6 le long de son axe A par rapport au carter 4, le deuxième pignon 24 d'entraînement en translation étant vissé sur un tronçon fileté 26 de la broche 6, de sorte que la broche 6 avance ou recule de long de l'axe A en fonction de la vitesse relative de rotation entre les pignons d'entraînement 20 et 24.

Le mécanisme d'entraînement 10 comporte un système d'embrayage 28 reliant mécaniquement en rotation le premier pignon d'entraînement 20 et le moteur 8, et débrayant ou embrayant le deuxième pignon d'entraînement 24 avec le moteur 8.

Le système d'embrayage 28 présente une configuration d'avance de la broche 6, dans laquelle le deuxième pignon d'entraînement 24 est embrayé au moteur 8, et une configuration de recul de la broche 6, dans laquelle le deuxième pignon d'entraînement 24 est débrayé du moteur 8 et immobilisé en rotation par rapport au carter 4.

Dans la configuration d'avance, le deuxième pignon d'entraînement 24 et le premier pignon d'entraînement 20 sont liés mécaniquement en rotation entre eux et au moteur 8. Le deuxième pignon d'entraînement 24 est entraîné en rotation à une vitesse supérieure au premier pignon d'entraînement 20 de façon à entraîner la broche 6 en translation suivant un mouvement d'avance le long de l'axe A, c'est-à-dire vers le bas sur la Figure 1.

Le système d'embrayage 28 illustré comporte plus précisément un premier pignon/crabot 30 engrenant avec le premier pignon d'entraînement 20 et avec le pignon de sortie 18, et un deuxième pignon/crabot 32 surmontant le premier pignon/crabot 30 et engrenant avec le deuxième pignon d'entraînement 24.

Le deuxième pignon/crabot 32 est enfilé sur un coulisseau 34 dont il est solidaire en translation. Le deuxième pignon/crabot 32 est ainsi mobile avec le coulisseau 34 entre une position abaissée (Figure 1) dans laquelle le deuxième pignon/crabot 32 crabote avec le premier pignon/crabot 30, correspondant à la configuration d'avance du système d'embrayage 28, et une position levée dans laquelle le deuxième pignon/crabot 32 crabote avec un crabot fixe 36 formé par le carter 4, dans laquelle le deuxième pignon d'entraînement 24 est ainsi immobilisé en rotation autour de l'axe A de la broche 6, ce qui correspond à la configuration de recul du système d'embrayage 28.

Le mécanisme d'entraînement 10 comporte un mécanisme d'appui axial 37 maintenant, lors du perçage, le deuxième pignon d'entraînement 24 dans sa position abaissée de la figure 1, et assurant l'amortissement de la fin de course de la broche 6. En effet, en fin de course, la broche 6 est bloquée en translation par rapport au carter 4 et déplace le deuxième pignon d'entraînement 24 vers le haut le long de l'axe A, du fait de la rotation de la broche 6 et de sa liaison hélicoïdale avec le deuxième pignon d'entraînement 24. Ce déplacement du deuxième pignon d'entraînement 24 est limité et amorti par le mécanisme d'appui axial 37.

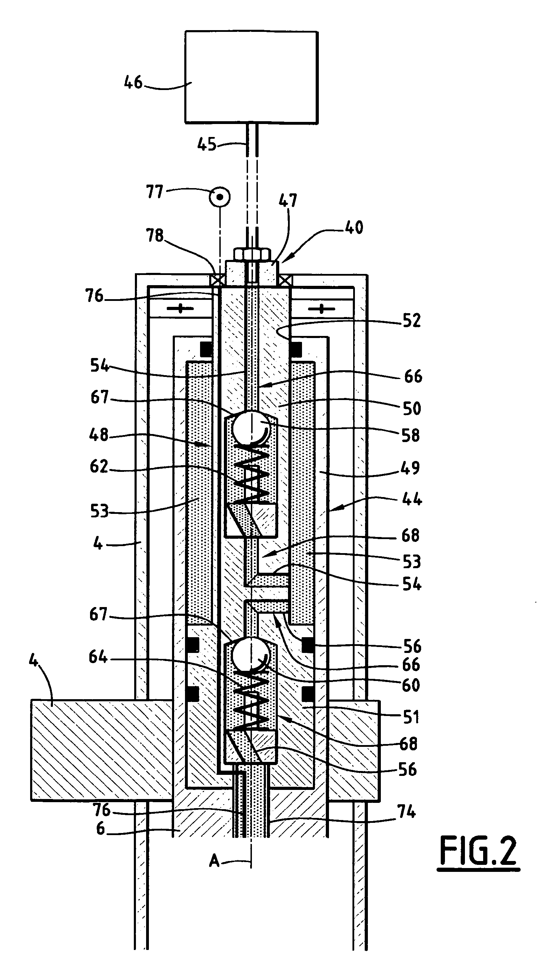

Le système de lubrification 12 va maintenant être décrit plus en détail, en regard de la Figure 2.

Ce système de lubrification 12 est situé au niveau de l'extrémité supérieure 38 de la broche 6, opposée à l'extrémité inférieure 14 portant l'outil 7.

Le système de lubrification 12 comporte une entrée de lubrifiant 40, un conduit interne de lubrifiant 42 délimité par la broche 6, et un module 44 d'admission de lubrifiant reliant l'entrée de lubrifiant 40 au conduit de lubrifiant 42 de la broche 6.

L'entrée de lubrifiant 40 est formée par un orifice traversant du carter 4 relié par un conduit externe 45 à un réservoir 46 de lubrifiant disposé à l'extérieur du carter 4. Un joint d'étanchéité 47 est monté dans l'entrée 40.

Le conduit interne 42 est d'axe A. Il traverse la broche 6 de part en part le long de l'axe A et débouche sur l'outil de perçage 7. Le conduit 42 relie ainsi le module 44 d'admission de lubrifiant et l'outil de perçage 7.

Le module d'admission 44 comporte un piston 48 fixe en translation le long de l'axe A par rapport au carter 4, et un cylindre 49 recevant le piston 48.

Le cylindre 49 est solidaire en translation de la broche 6 le long de l'axe A. Il est également solidaire en rotation de la broche 6 autour de l'axe A. Le cylindre 49 est d'axe A.

Le cylindre 49 est, dans l'exemple illustré, venu de matière avec la broche 6 et prolonge la broche 6 le long de l'axe A.

Le piston 48 comporte un tige 50 et une tête 51 formant piston.

La tige 50 est reçue de façon traversante, étanche et coulissante dans un alésage 52 ménagé à l'extrémité supérieure du cylindre 49. Un joint d'étanchéité d'annulaire est prévu dans l'alésage 52.

La tête 51 est reçue de façon étanche et coulissante le long de l'axe A, dans le cylindre 49, lui-même d'axe A. Deux joints d'étanchéité annulaires assurent l'étanchéité de cette liaison.

Le piston 48 est monté purement rotatif par rapport au carter 4, autour de l'axe A. A cet effet, le piston 48 est porté par des roulements. Le piston 48 est ainsi fixe en translation par rapport au carter 4. En outre, le piston 48 et le cylindre 49 sont solidaires en rotation autour de l'axe A.

Le piston 48 et le cylindre 49 définissent ensemble une chambre de pompage 53. La chambre de pompage 53 s'étend dans l'espace annulaire défini entre la tige 50 et le cylindre 49. La chambre de pompage 53 est en permanence totalement emplie de lubrifiant.

Lors de l'avance de la broche 4, le cylindre 49 coulisse par rapport au piston 48 en diminuant le volume de la chambre 53, ce qui correspond à une configuration d'alimentation en lubrifiant du conduit de lubrifiant 42 dans laquelle le module d'admission 44 alimente le conduit 42 en lubrifiant à partir du lubrifiant aspiré préalablement dans la chambre de pompage 53.

Lors du recul de la broche 6, le cylindre 49 coulisse par rapport au piston 48 en augmentant le volume de la chambre 53, ce qui correspond à une configuration d'aspiration de lubrifiant à partir de l'entrée de lubrifiant 40, dans laquelle le module d'admission 44 aspire le lubrifiant dans la chambre de pompage 53.

La configuration d'aspiration correspond également à une configuration d'arrêt d'alimentation dans laquelle l'alimentation du conduit de lubrifiant 42 par le module d'admission 44 est arrêtée.

Le piston 48 délimite en outre intérieurement un conduit de remplissage 54 relié à l'entrée de lubrifiant 40 et débouchant dans la chambre de pompage 53, ainsi qu'un conduit d'alimentation 56 débouchant dans la chambre de pompage 53 et relié au conduit 42 de la broche 6.

Le piston 48 comporte, à l'intérieur du conduit de remplissage 54, une soupape de remplissage 58 mobile entre une position d'ouverture du conduit de remplissage 54 et une position de fermeture du conduit de remplissage 54. Le piston 48 comporte, à l'intérieur du conduit d'alimentation 56, une soupape d'alimentation 60 mobile entre une position d'ouverture du conduit d'alimentation 56 et une position de fermeture du conduit d'alimentation 56.

La position d'ouverture de la soupape d'alimentation 60 correspond à la configuration d'alimentation du conduit de lubrifiant 42 en lubrifiant. Dans la configuration d'alimentation, la soupape de remplissage 58 est fermée.

La position d'ouverture de la soupape de remplissage 58 correspond à la configuration d'aspiration de lubrifiant à partir de l'entrée de lubrifiant 40, et du réservoir 46. Dans la configuration d'aspiration, la soupape d'alimentation 60 est fermée et l'alimentation en lubrifiant du conduit 42 est arrêtée.

Chaque soupape 58, 60 est, dans l'exemple illustré, formé par une bille mobile en translation suivant l'axe A entre sa position de fermeture et sa position d'ouverture. Les soupapes 58 et 60 sont sollicitées élastiquement par un ressort respectif 62, 64, vers leur position de fermeture.

L'effort exercé par chaque ressort 62, 64 est suffisant pour fermer la soupape correspondante 58, 60 lors de l'arrêt de la broche 6.

Lors de l'avance de la broche 6, l'effort exercé par le ressort 64 sur la soupape d'alimentation 60 est inférieur à l'effort de pression exercé par le lubrifiant présent dans la chambre de pompage 53, sur la soupape d'alimentation 60.

Lors du recul de la broche 6, l'effort exercé par le ressort 62 sur la soupape de remplissage 58 est inférieur à l'effort de succion exercé par le lubrifiant présent dans la chambre de pompage 53, sur la soupape de remplissage 58.

Chacun des conduits de remplissage et d'alimentation 54, 56 comporte une partie amont 66, considérée dans le sens de circulation du lubrifiant vers l'outil 7, formant siège de soupape 67. La soupape 58, 60 vient, en position de fermeture, obturer le siège 67 de manière sensiblement étanche. Chacun des conduits 54, 56 comporte en outre une partie aval 68 définissant une chambre élargie 70 dans laquelle la soupape respective 58, 60 est logée, avec son ressort 62, 64.

La partie aval 68 du conduit de remplissage 54 et la partie amont 66 du conduit d'alimentation 56 débouchent dans la chambre de pompage 53.

La partie aval 68 du conduit d'alimentation 56 forme un tuyau 74 pénétrant le conduit de lubrifiant 42 de la broche 6 sur une longueur suffisante pour assurer une alimentation du conduit de lubrifiant 42 dans toutes les positions de la broche 6 le long de son axe A.

Enfin, le piston 48 comporte un conduit 76 d'injection d'air dans le conduit de lubrifiant 42 de la broche 6, de façon à pulvériser (« mist » en anglais) le lubrifiant. Le conduit d'injection d'air 76 traverse le piston 48 de part en part le long de l'axe A. Il débouche à l'extérieur du carter 4, de façon à être relié à une source d'air comprimé 77 par l'intermédiaire d'un raccord pneumatique tournant 78 avec réglage de débit, et débouche, à l'extrémité opposée, dans le tuyau 74.

Le fonctionnement de la machine 2 selon l'invention va maintenant être décrit, notamment en référence aux Figures 2 à 5 qui illustrent différentes étapes d'un procédé d'usinage réalisé au moyen de la machine 2 selon l'invention.

Dans la position de la Figure 2, la broche 6 est reculée, c'est-à-dire en fin de course de recul. Les soupapes 58 et 60 sont dans leur position de fermeture.

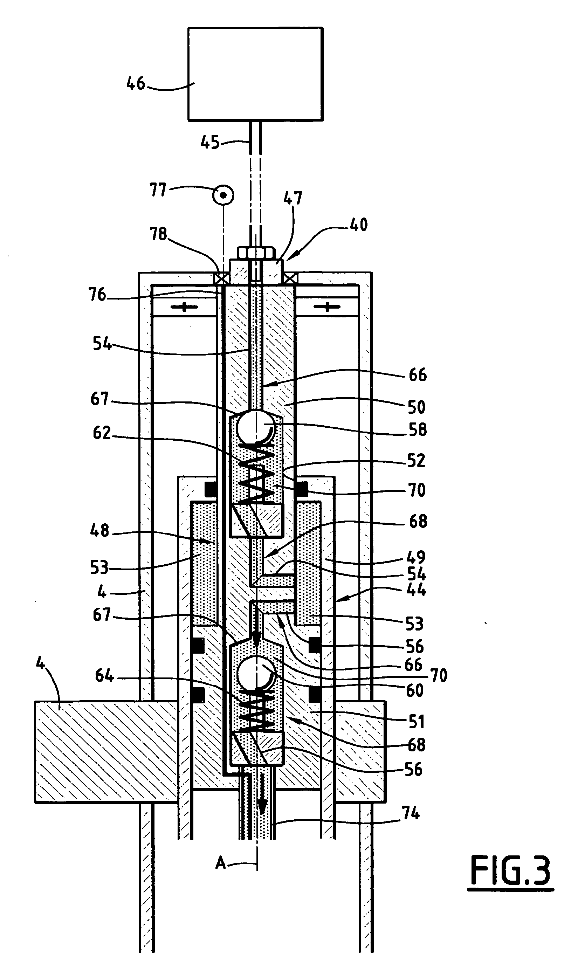

Lors de l'avance de la broche 6, illustrée par le figure 3, le cylindre 49 solidaire de la broche 6 se déplace conjointement avec celle-ci vers le bas le long de l'axe A. Le piston 48 reste immobile en translation le long de l'axe A. Le volume de la chambre de pompage 53 diminue alors, ce qui génère une surpression dans la partie aval 68 du conduit de remplissage 54 et dans la partie amont 66 du conduit d'alimentation 56.

La surpression dans la partie aval 68 du conduit de remplissage 54 maintient la soupape de remplissage 58 dans sa position de fermeture, tandis que la surpression dans la partie amont 66 du conduit d'alimentation 56, déplace la soupape d'alimentation 60 vers sa position d'ouverture. Le tuyau 74 est alors alimenté en lubrifiant par la chambre de pompage 53, par l'intermédiaire du conduit d'alimentation 56. Le conduit de lubrifiant 42 de la broche 6 et l'outil 7 porté à l'extrémité inférieure 14 de la broche 6 sont ainsi alimentés en lubrifiant.

En outre, lors de l'avance de la broche 6, le conduit 76 d'injection d'air est alimenté en air comprimé, de façon à pulvériser le lubrifiant (« mist » en anglais) présent dans le conduit de lubrifiant 42.

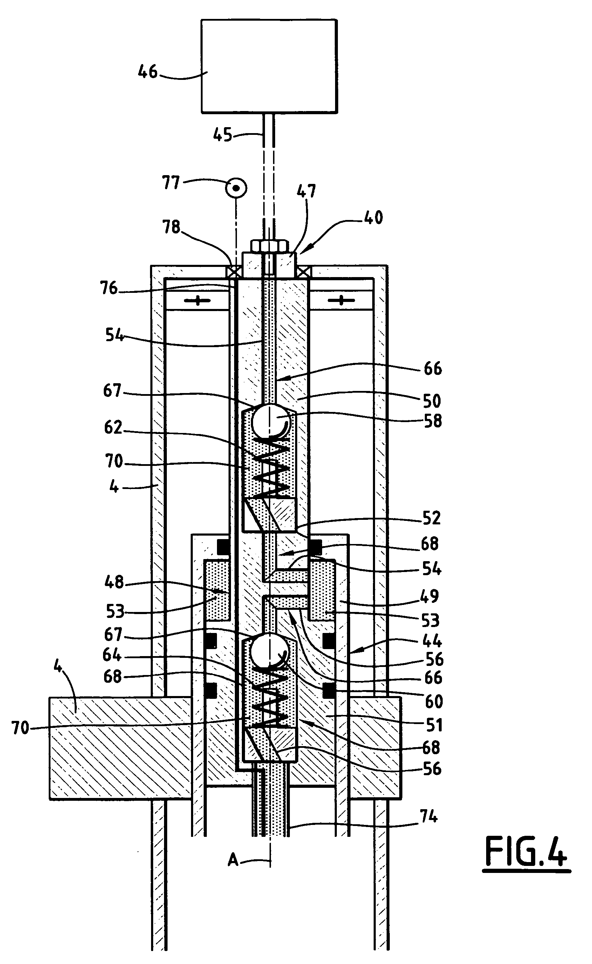

La Figure 4 illustre la broche 6 dans sa position de fin de course d'avance, dans laquelle la soupape d'alimentation 60 est revenue dans sa position de fermeture, suite à l'arrêt de la broche 6 et à la diminution de pression dans la chambre de pompage 53 qui s'en suit.

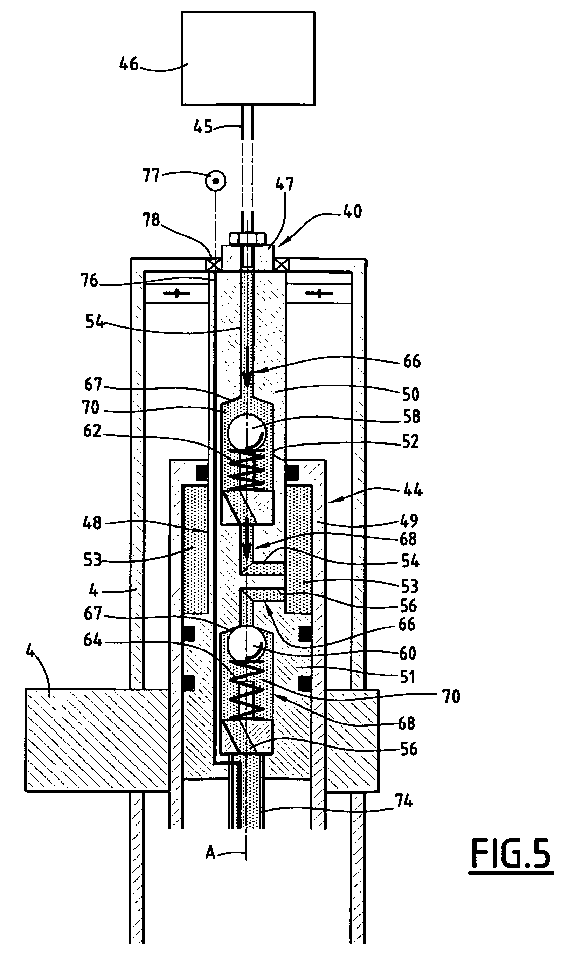

Lors du recul de la broche 6, illustré par la Figure 5, le cylindre 49 solidaire de la broche 6 se déplace conjointement avec celle-ci vers le haut le long de l'axe A. Le piston 48 reste immobile en translation le long de l'axe A. Le volume de la chambre de pompage 53 augmente alors, générant une dépression dans la partie aval 68 du conduit de remplissage 54 et dans la partie amont 66 du conduit d'alimentation 56.

La dépression dans la partie amont 66 du conduit d'alimentation 56 maintient la soupape d'alimentation 60 dans sa position de fermeture.

La dépression dans la partie aval 68 du conduit de remplissage 54 déplace la soupape de remplissage 58 vers sa position d'ouverture, à l'encontre du ressort 62. Il s'en suit le remplissage de la chambre de pompage 53 par aspiration de lubrifiant à partir du réservoir 46 de lubrifiant, par l'intermédiaire du conduit de remplissage 54.

Une fois le recul de la broche 6 terminé, la différence de pression entre le réservoir 46 et la chambre de pompage 53 diminue et la soupape de remplissage 58 revient dans sa position de fermeture. La machine d'usinage 2 est alors prête pour un nouveau mouvement d'avance de la broche 6.

Avec l'invention, il n'est plus nécessaire de prévoir une pompe rapportée à l'extérieur ou à l'intérieur de la machine d'usinage 2, la fonction de pompage étant assurée par la broche 6 et son mouvement d'avance et de recul. En effet, l'énergie mécanique fournie par l'avance et le recul de la broche 6 est utilisée pour le pompage de lubrifiant, c'est-à-dire pour l'aspiration de lubrifiant à partir de l'entrée 40 et l'alimentation (ou « injection ») du lubrifiant aspiré dans le conduit de lubrifiant 42. La broche 6 actionne mécaniquement, par son mouvement d'avance et de recul, le pompage de lubrifiant.

L'encombrement de la machine 2 est réduit, notamment l'encombrement du système de lubrification 12, ainsi que le poids de la machine 2, ce qui en améliore la maniabilité.

Le système de lubrification 12 est également simple et fiable.

En outre, le coût de fabrication de la machine 2 est faible, le nombre de composants étant réduit.

Le pompage est également réalisé de manière économe en énergie, l'énergie nécessaire au pompage étant fournie par le mouvement de la broche 6 le long de son axe de translation.

Dans l'exemple illustré, la machine 2 est une machine de perçage. En variante néanmoins, l'outil 7 est une fraise ou un outil aléseur avec fraisureur.

En variante, le piston est fixe en rotation par rapport au carter.

En variante encore, l'un du cylindre et du piston est solidaire en translation de la broche le long de son axe et libre en rotation par rapport à la broche. Ledit un du piston et du cylindre est alors de préférence fixe en rotation par rapport au carter, l'autre du piston et du cylindre étant également fixe en rotation par rapport au carter.

En variante également, le piston est solidaire en translation de la broche 6 le long de son axe, le cylindre étant fixe en translation par rapport au carter.

En variante encore, le mécanisme d'entraînement à avance mécanique de la broche est de tout type adapté, même si le mécanisme 10 décrit présente l'avantage d'un encombrement réduit tout étant compatible avec le système de lubrification.

## Revendications

1. Machine d'usinage (2), du type comprenant :
- un carter (4);
- une broche porte-outils (6) s'étendant le long d'un axe (A) et destinée à porter un outil d'usinage (7);
- un mécanisme (10) d'entraînement à avance mécanique de la broche porte-outils (6), apte à entraîner la broche (6) simultanément en rotation autour de son axe (A) par rapport au carter (4) et en translation le long de son axe (A) par rapport au carter (4) suivant un mouvement d'avance ou de recul ; et
- un système de lubrification (12) de l'outil d'usinage (7), comprenant :
• une entrée de lubrifiant (40),
• un conduit de lubrifiant (42) délimité par la broche (6), le conduit de lubrifiant (42) débouchant à une extrémité (14) de la broche (6) destinée à porter l'outil d'usinage (7), pour alimenter l'outil d'usinage (7) en lubrifiant ; et
• un module d'admission (44) de lubrifiant reliant l'entrée de lubrifiant (40) audit conduit de lubrifiant (42),
**caractérisé en ce que** le module d'admission de lubrifiant (44) forme une pompe de lubrifiant aspirant le lubrifiant à partir de l'entrée de lubrifiant (40) et alimentant le conduit de lubrifiant (42) de la broche (6) avec le lubrifiant aspiré, l'avance et le recul de la broche (6) le long de son axe (A) actionnant le pompage de lubrifiant par le module d'admission (44).

2. Machine d'usinage (2) selon la revendication 1, dans laquelle le module d'admission (44) présente une configuration d'alimentation en lubrifiant du conduit de lubrifiant (42) de la broche (6) et une configuration d'aspiration de lubrifiant depuis l'entrée de lubrifiant (40), l'avance de la broche (6) actionnant le module d'admission (44) dans la configuration d'alimentation et le recul de la broche (6) actionnant le module d'admission (44) dans la configuration d'aspiration.

3. Machine d'usinage (2) selon la revendication 2, dans laquelle la configuration d'aspiration de lubrifiant par le module d'admission (44) correspond à une configuration d'arrêt d'alimentation par le module d'admission (44), du conduit de lubrifiant (42) de la broche (6).

4. Machine d'usinage (2) selon l'une quelconque des revendications précédentes, dans laquelle le module d'admission (44) comprend un piston (48) et un cylindre (49) définissant ensemble une chambre de pompage (53), la chambre de pompage (53) étant reliée à l'entrée de lubrifiant (40) et au conduit de lubrifiant (42) de la broche (6), la broche (6) étant liée en translation le long de son axe (A) à l'un du piston (48) et du cylindre (49), l'avance et le recul de la broche (6) le long de son axe (A) modifiant le volume de la chambre de pompage (53).

5. Machine d'usinage (2) selon la revendication 4, dans laquelle l'autre du piston (48) et du cylindre (49) est fixe en translation par rapport au carter (4) suivant l'axe de la broche (A).

6. Machine d'usinage (2) selon la revendication 4 ou 5, dans laquelle la broche (6) est liée en translation le long de son axe (A) avec le cylindre (49).

7. Machine d'usinage (2) selon l'une quelconque des revendications 4 à 6, dans laquelle le piston (48) délimite un conduit de remplissage (54) relié à l'entrée de lubrifiant (40) et débouchant dans la chambre de pompage (53), le piston (48) délimitant un conduit d'alimentation (56) débouchant dans la chambre de pompage (53) et relié au conduit de lubrifiant (42) de la broche (6), le piston (48) comprenant une soupape de remplissage (58) mobile entre une position de fermeture du conduit de remplissage (54) et une position d'ouverture du conduit de remplissage (54) , et une soupape d'alimentation (60) mobile entre une position de fermeture du conduit d'alimentation (56) et une position d'ouverture du conduit d'alimentation (56).

8. Machine d'usinage (2) selon la revendication 7 prise ensemble avec la revendication 2, dans laquelle, dans la configuration d'aspiration, la soupape de remplissage (58) est dans sa position d'ouverture tandis que la soupape d'alimentation (60) est dans sa position de fermeture et dans laquelle, dans la configuration d'alimentation, la soupape de remplissage (58) est dans sa position de fermeture tandis que la soupape d'alimentation (60) est dans sa position d'ouverture.

9. Machine d'usinage (2) selon la revendication 8, dans laquelle la soupape de remplissage (58) et la soupape d'alimentation (60) sont sollicitées élastiquement vers leur position de fermeture par un organe de sollicitation élastique respectif (62, 64).

10. Machine d'usinage (2) selon la revendication 9, dans laquelle l'effort exercé par l'organe de sollicitation élastique (82) sur la soupape de remplissage (58) est inférieur à l'effort de succion exercé par le lubrifiant présent dans la chambre de pompage (53), sur la soupape de remplissage (58), lors du recul de la broche (6) le long de son axe (A).

11. Machine d'usinage (2) selon la revendication 9 ou 10, dans laquelle l'effort exercé par l'organe de sollicitation élastique (64) sur la soupape d'alimentation (60) est inférieur à l'effort de pression exercé par le lubrifiant présent dans la chambre de pompage (53), sur la soupape d'alimentation (60), lors de l'avance de la broche (6) le long de son axe (A).

12. Machine d'usinage (2) selon l'une quelconque des revendications précédentes, dans laquelle le module d'admission (44) est logé dans le carter (4).

13. Machine d'usinage (2) selon l'une quelconque des revendications précédentes, comportant un réservoir de lubrifiant (46), relié à l'entrée de lubrifiant (40), et de préférence disposé à l'extérieur du carter (4) de la machine (2).

14. Machine d'usinage (2) selon l'une quelconque des revendications précédentes, dans laquelle le mécanisme d'entraînement (10) de la broche (6) comporte :
• un premier organe d'entraînement (20) en rotation de la broche (6) autour de son axe (A) par rapport au carter (4);
• un deuxième organe d'entraînement (24) en translation de la broche (6) le long de son axe (A) par rapport au carter (4), le deuxième organe d'entraînement (24) étant vissé sur un tronçon fileté (26) de la broche (6) de sorte que la broche (6) avance ou recule en fonction de la vitesse relative de rotation entre le premier organe d'entraînement (20) et le deuxième organe d'entraînement (24).

15. Procédé d'usinage d'un matériau au moyen d'une machine d'usinage (2) portant un outil d'usinage (7), le procédé comprenant une étape de lubrification automatique de l'outil d'usinage (7) par la machine d'usinage (2), **caractérisé en ce que** la machine d'usinage (2) est selon l'une quelconque des revendications précédentes, l'étape de lubrification comprenant une étape de pompage de lubrifiant par le mouvement alternatif d'avance et de recul de la broche (6).

## Claims

1. Processing machine (2), of the type comprising:
- a casing (4);
- a tool-holder spindle (6) which extends along an axis (A) and which is to carry a machine tool (7);
- a positive feed drive mechanism (10) for the tool-holder spindle (6), which mechanism is suitable for driving the spindle (6) simultaneously in rotation about its axis (A) relative to the casing (4) and in translation along its axis (A) relative to the casing (4) in accordance with an advance or return movement; and
- a system (12) for lubricating the machine tool (7), comprising:
• lubricant inlet (40);
• a lubricant duct (42) delimited by the spindle (6), the lubricant duct (42) opening out at an end (14) of the spindle (6) which is to carry the machine tool (7), in order to supply the machine tool (7) with lubricant; and
• a lubricant-admission module (44) connecting the lubricant inlet (40) to the said lubricant duct (42),
**characterized in that** the lubricant-admission module (44) forms a lubricant pump drawing in the lubricant from the lubricant inlet (40) and supplying the lubricant duct (42) of the spindle (6) with the drawn-in lubricant, the advance and return of the spindle (6) along its axis (A) activating the pumping of lubricant by the admission module (44).

2. Processing machine (2) according to claim 1, wherein the admission module (44) has a configuration for supplying lubricant to the lubricant duct (42) of the spindle (6) and a configuration for the induction of lubricant from the lubricant inlet (40), the advance of the spindle (6) activating the admission module (44) in the supply configuration and the return of the spindly (6) activating the admission module (44) in the induction configuration.

3. Processing machine (2) according to claim 2, wherein the configuration for the induction of lubricant by the admission module (44) corresponds to a configuration for stopping the supply by the admission module (44) to the lubricant duct (42) of the spindle (6).

4. Processing machine (2) according to any one of the preceding claims, wherein the admission module (44) comprises a piston (48) and a cylinder (49) which together define a pumping chamber (53), the pumping chamber (53) being connected to the lubricant inlet (40) and to the lubricant duct (42) of the spindle (6), the spindle (6) being connected for translation along its axis (A) to one of the piston (48) and the cylinder (49), the advance and the return of the spindle (6) along its axis (A) modifying the volume of the pumping chamber (53).

5. Processing machine (2) according to claim 4, wherein the other of the piston (48) and the cylinder (49) is fixed in terms of translation relative to the casing (4) along the axis (A) of the spindle.

6. Processing machine (2) according to claim 4 or 5, wherein the spindle (6) is connected for translation along its axis (A) to the cylinder (49).

7. Processing machine (2) according to any one of claims 4 to 6, wherein the piston (48) delimits a filling duct (54) connected to the lubricant inlet (40) and leading into the
pumping chamber (53), the piston (48) delimiting a supply duct (56) leading into the pumping chamber (53) and connected to the lubricant duct (42) of the spindle (6), the piston (48) comprising a filling valve (58) which is mobile between a position of closing the filling duct (54) and a position, of opening the filling duct (54), and a supply valve (60) which is mobile between a position of closing the supply duct (56) and a position of opening the supply duct (56) .

8. Processing machine (2) according to claim 7 taken together with claim 2, wherein, in the induction configuration, the filling valve (58) is in its opening position while the supply valve (60) is in its closing position and wherein, in the supply configuration, the filling valve (58) is in its closing position while the supply valve (60) is in its opening position.

9. Processing machine (2) according to claim 8, wherein the filling valve (58) and the supply valve (60) are urged resiliently towards their closing position by a respective resilient biasing member (62, 64).

10. Processing machine (2) according to claim 9, wherein the force exerted on the filling valve (58) by the resilient biasing member (62) is smaller than the suction force exerted on the filling valve (58) by the lubricant present in the pumping chamber (53), during the return of the spindle (6) along its axis (A).

11. Processing machine (2) according to claim 9 or 10, wherein the force exerted on the supply valve (60) by the resilient biasing member (64) is smaller than the pressing force exerted on the supply valve (60) by the lubricant present in the pumping chamber (53), during the advance of the spindle (6) along its axis (A).

12. Processing machine (2) according to any one of the preceding claims, wherein the admission module (44) is accommodated in the casing (4).

13. Processing machine (2) according to any one of the preceding claims, comprising a lubricant reservoir (46) connected to the lubricant inlet (40) and preferably located outside the casing (4) of the machine (2).

14. Processing machine (2) according to any one of the preceding claims, wherein the mechanism (10) for driving the spindle (6) comprises:
• a first member (20) for driving the spindle (6) in rotation about its axis (A) relative to the casing (4);
• a second member (24) for driving the spindle (6) in translation along its axis (A) relative to the casing (4), the second drive member (24) being screwed onto a threaded portion (26) of the spindle (6) so that the spindle (6) advances or returns in accordance with the relative rate of rotation between the first drive member (20) and the second drive member (24).

15. Method for processing a material by means of a processing machine (2) carrying a machine tool (7), the method comprising a step for the automatic lubrication of the machine tool (7) by the processing machine (2), **characterized in that** the processing machine (2) is in accordance with any one of the preceding claims, the lubricating step comprising a step of pumping lubricant by the alternating advance and return movement of the spindly (6).

## Patentansprüche

1. Werkzeugmaschine (2), des Typ, der folgendes einschließt:
- ein Gehäuse (4);
- eine Werkzeughalterspindel (6), die sich entlang einer Achse (A) erstreckt und dazu ausgelegt ist, ein Bearbeitungswerkzeug (7) zu tragen;
- einen mechanischen Vorschubmechanismus (10) der Werkzeughalterspindel (6), der dazu geeignet ist, die Spindel (6) unter gleichzeitiger Flotation um ihre Achse (A) bezüglich des Gehäuses (4) und Translation entlang ihrer Achse (A) bezüglich des Gehäuses (4) unter Befolgung einer Vorschub- oder Rückschubbewegung anzutreiben: und
- ein Schmiersystem (12) des Bearbeitungswerkzeugs (7), das folgendes einschließt:
• einen Schmierstoff-Zutritt (40),
• eine von der Spindel (6) begrenzte Schmierstoffleitung (42), wobei die Schmierstoffleitung (42) in ein Ende (14) der Spindel (6) einmündet, welches dazu ausgelegt ist, das Bearbeitungswerkzeug (7) zu tragen, um das Bearbeitungswerkzeug (7) mit Schmierstoff zu speisen; und
• ein Schmierstoff-Einlassmodul (44), welches den Schmierstoff-Zutritt (40) mit der Schmierstofflleitung (42) verbindet,
**dadurch gekennzeichnet, dass** das Schmierstoff-Einlassmodul (44) eine Schmierpumpe bildet, die den Schmierstoff von dem Schmierstoff-Zutritt (40) ansaugt und die Schmierstoffleitung (42) der Spindel (6) mit dem angesaugten Schmierstoff speist, wobei der Vorschub und der Rückschub der Spindel (6) entlang der Achse (A) das Pumpen von Schmierstoff durch das Schmierstoff-Einlassmodul (44) betreiben.

2. Werkzeugmaschine (2) nach Anspruch 1, wobei das Schmierstoff-Einlassmodul (44) eine Speisekonfiguration von Schmierstoff der Schimierstoftleitung (42) der Spindel (6) und eine Ansaugkonfiguration von Schmierstoff von dem Schmierstoff-Zutritt (40) aus aufweist, wobei der Vorschub der Spindel (6) das Einlassmadul (44) in der Speisekonfiguration betreibt und der Rückschub der Spindel (6) das Einlassmodul (44) in der Ansaugkonfiguration betreibt.

3. Werkzeugmaschine (2) nach Anspruch 2, wobei die Schmierstoff-Ansaugkonfiguration durch das Einlassmodul (44) einer Speisestoppkonfiguration durch das Einlassmodul (44) der Schmierstoffleitung (42) der Spindel (6) entspricht.

4. Werkzeugmaschine (2) nach einem der vorhergehenden Ansprüche, wobei das Einlassmodul (44) einen Kolben, (48) und einen Zylinder (49) umfasst, die zusammen eine Pumpkammer (53) definieren, wobei die Pumpkammer (53) mit dem Schmierstoff-Zutritt (40) und mit der Schmierstoffleitung (42) der Spindel (6) verbunden ist, wobei die Spindel (6) translatorisch entlang ihrer Achse (A) mit einem von dem Kolben (48) und dem Zylinder (49) verbunden ist, wobei der Vorschub und der Rückschub der Spindel (6) entlang ihrer Achse (A) das Volumen der Pumpkammer (53) modifizieren.

5. Werkzeugmaschine (2) nach Anspruch 4, wobei der andere des Kolbens (48) und des Zylinders (49) translatorisch bezüglich des Gehäuses (4) entlang der Achse der Spindel (A) feststehend ist.

6. Werkzeugmaschine (2) nach einem der Ansprüche 4 oder 5, wobei die Spindel (6) translatorisch entlang der Achse (A) mit dem Zylinder (49) verbunden ist.

7. Werkzeugmaschine (2) nach einem der Ansprüche 4 bis 6, wobei der Kolben (48) eine Füllleitung (54) begrenzt, die mit dem Schmierstoff-Zutritt (40) verbunden ist und in die Pumpkammer (53) einmündet, wobei der Kolben (48) eine Speiseleitung (56) begrenzt, die in die Pumpkammer (53) einmündet und mit der Schmierstoffteitung (42) der Spindel (6) verbunden ist, wobei der Kolben (48) ein Füllventil (58), das zwischen einer Verschlussposition der Fülleitung (54) und einer Öffnungsposition der Fülleitung (54) beweglich ist, und ein Speiseventil (60), das zwischen einer Verschlussposition der Speiseleitung (56) und einer Öffnungsposition der Speiseleitung (56) beweglich ist, einschließt.

8. Werkzeugmaschine (2) nach Anspruch 7 in Verbindung mit Anspruch 2, wobei, in der Ansaugkonfiguration, das Füllventil (58) sich in seiner Offnungsposition befindet, während das Speiseventil (60) sich in seiner Verschlussposition befindet, und wobei, in der Speisekonfiguration, das Füllventil (58) sich in seiner Verschlussposition befindet, während das Speiseventil (60) sich in seiner Öffnungsposition befindet.

9. Werkzeugmaschine (2) nach Anspruch 8, wobei das Füllventil (58) und das Speiseventil (60) elastisch in Richtung ihrer Öffnungsposition durch ein jeweiliges Belastungsorgan (62, 64) belastet werden.

10. Werkzeugmaschine (2) nach Anspruch 9, wobei die durch das elastische Belastungsorgan (82) auf das Füllventil (58) ausgeübte Belastung kleiner ist als die Saugbelastung, die von dem in der Pumpkammer (53) vorhandenen Schmierstoff beim Rückschub der Spindel (6) entlang ihrer Achse (A) auf das Füllventil (58) ausgeübt wird.

11. Werkzeugmaschine (2) nach Anspruch 9 oder 10, wobei die durch das elastische Belastungsorgan (64) auf das Speiseventil (60) ausgeübte Belassung kleiner ist als die Druckbelastung, die von dem in der Pumpkammer (53) vorhandenen Schmierstoff beim Vorschub der Spindel (6) entlang ihrer Achse (A) auf das Speiseventil (60) ausgeübt wird.

12. Werkzeugmaschine (2) nach einem der vorhergehenden Ansprüche, wobei das Einlassmodul (44) in dem Gehäuse (4) angeordnet ist.

13. Werkzeugmaschine (2) nach einem der vorhergehenden Ansprüche, umfassend ein Schmierstoffreservoir (46), das mit dem Schmierstoff-Zutritt (40) verbunden ist und vorzugsweise im Inneren des Gehäuses (4) der Maschine (2) angeordnet ist.

14. Werkzeugmaschine (2) nach einem der vorhergehenden Ansprüche, wobei der Antriebsmechanismus (10) der Spindel (6) folgendes umfasst:
• ein erstes rotatorisches Antriebsorgan (20) der Spindel (6) um ihre Achse (A) bezüglich des Gehäuses;
• ein zweites translatorisches Antriebsorgan (24) der Spindel (6) entlang ihrer Achse (A) bezüglich des Gehäuses, wobei das zweite Antriebsorgan (24) auf ein Gewinde-Teilstück (26) der Spindel (6) aufgeschraubt ist, derart, dass sich die Spindel in Funktion der relativen Rotationsgeschwindigkeit zwischen dem ersten Antriebsorgan (20) und dem zweiten Antriebsorgan (24) vor und zurück bewegt.

15. Bearbeitungsverfahren für Material mittels einer Werkzeugmaschine (2), die ein Bearbeitungswerkzeug (7) trägt, wobei das Verfahren einen automatischen Bearbeitungswerkzeug (7)-Schmierschritt durch das Bearbeitungswerkzeug (2) umfasst, **dadurch gekennzeichnet, dass** das Bearbeitungswerkzeug (2) gemäß einem der vorhergehenden Ansprüche ist, wobei der Schmierschritt einen Schmierstoff-Pumpschritt durch die abwechselnde Vorschub- und Rückschubbewegung der Spindel (6) umfasst.
